Europäisches Patentamt

European Patent Office

Office européen des brevets

(19)

(11) EP 1 087 555 A1

(12) **DEMANDE DE BREVET EUROPEEN**

(43) Date de publication:
**28.03.2001 Bulletin 2001/13**

(51) Int Cl.⁷: **H04B 10/18**

(21) Numéro de dépôt: **00402574.8**

(22) Date de dépôt: **18.09.2000**

(84) Etats contractants désignés:
**AT BE CH CY DE DK ES FI FR GB GR IE IT LI LU MC NL PT SE**
Etats d'extension désignés:
**AL LT LV MK RO SI**

(30) Priorité: **27.09.1999 FR 9911991**

(71) Demandeur: **ALCATEL**
**75008 Paris (FR)**

(72) Inventeurs:
• **Pincemin, Erwan**
**22290 Gommenec'h (FR)**
• **Bigo, Sébastien**
**91120 Palaiseau (FR)**

(74) Mandataire: **Lamoureux, Bernard et al**
**COMPAGNIE FINANCIERE ALCATEL**
**Dépt. Propriété industrielle**
**30, avenue Kléber**
**75116 Paris (FR)**

(54) **Dispositif pour limiter le bruit dans les "zéros" des signaux RZ optiques**

(57) L'invention concerne un dispositif pour limiter le bruit dans les "zéros" des signaux RZ optiques; le dispositif comprenant une fibre biréfringente pour décaler spectralement les signaux entre eux en fonction de leur intensité, et un filtre pour filtrer les signaux décalés. Le filtre atténue les impulsions correspondant à des "zéros", mais laisse passer les impulsions correspondant à des "uns".

L'invention permet de limiter le bruit dans les "zéros" d'un signal RZ.

FIG_3

EP 1 087 555 A1

**Description**

La présente invention concerne le domaine des transmissions par fibres optiques, et plus particulièrement la régénération optique pour des systèmes de transmission à fibres optiques. Elle s'applique particulièrement à des systèmes de transmission à signaux RZ (retour à zéro), comme par exemple des systèmes de transmission à signaux solitons. On appelle impulsion ou "un" le signal RZ correspondant à la transmission d'une valeur logique élevée. On appelle "zéro" l'absence de signal, qui correspond à la transmission d'une valeur logique basse.

La transmission d'impulsions solitons ou solitons dans la partie d'une fibre optique à dispersion anormale est un phénomène connu. Les solitons sont des signaux impulsionnels de forme $sech^2$. Avec cette forme d'impulsion, la non-linéarité dans la partie correspondante de la fibre compense la dispersion du signal optique. La transmission des solitons est modélisée de façon connue par l'équation de Schrôdinger non-linéaire. Ont aussi été proposés des systèmes de transmission à signaux solitons gérés en dispersion (en langue anglaise, "dispersion-managed solitons transmissions"). Dans de tels systèmes, on utilise un motif de dispersion qui se répète périodiquement pendant des milliers de kilomètres : à une fibre de dispersion anormale (dispersion positive) succède une fibre de dispersion normale (dispersion négative) qui vient compenser presque totalement la dispersion anormale accumulée dans le premier type de fibre. Les signaux se propagent donc dans des fibres de forte dispersion locale mais ne voient au final qu'une dispersion moyenne très faible. Un tel schéma de transmission permet une réduction sensible des effets de gigue (à cause de la faible dispersion moyenne), une nette diminution des effets de collisions entre canaux (à cause de la forte dispersion locale), une amélioration du rapport signal à bruit et un accroissement de l'efficacité spectrale du système. Un tel système est par exemple décrit dans un article de N.J. Smith et N.J. Doran, Journal of Lightwave Technology, vol. 15, n° 10 (1997), p. 1808 et s. .

Il a été proposé d'utiliser une modulation synchrone des signaux solitons, par un signal d'horloge ou horloge, pour corriger leur gigue temporelle ; une modulation d'intensité est par exemple décrite dans un article de H. Kubota et M. Nakasawa, IEEE Journal of Quantum Electronics, vol. 29 n° 7 (1993), p. 2189 et s. ; un article de N. J. Smith et N. J. Doran, Optical Fiber Technology, 1, p. 218 (1995) propose une modulation de phase.

Un des problèmes rencontrés dans les systèmes de transmission à fibres optiques réside dans la distorsion que subissent les signaux optiques lorsqu'ils sont générés, transmis ou commutés, ou plus généralement à chaque traitement optique dans le système de transmission. La régénération optique par modulation d'intensité vise à résoudre ce problème de distorsion, en appliquant à chaque bit un signal d'intensité maximale au centre de la fenêtre temporelle du bit, et d'intensité faible sur les bords de la fenêtre temporelle.

Toutefois, la modulation d'intensité ne fournit pas une solution entièrement satisfaisante, notamment dans les "zéros" des signaux RZ. Le bruit dans les "zéros" c'est-à-dire le bruit dans les fenêtres temporelles correspondant à un bit à zéro, ou à un bit sans signal, n'est pas complètement supprimé, en particulier pour des systèmes de transmission transocéaniques.

C. R. Menyuk, Stability of solitons in birefringent optical fibers. I : Equal propagation amplitudes, Optics Letters, vol. 12 no. 8, Août 1987 propose un modèle des effets de la biréfringence sur la propagation des solitons dans des fibres monomodes. La biréfringence, c'est-à-dire la différence d'indice optique entre les deux directions de polarisation des fibres optiques, conduit à une séparation d'une impulsion soliton en deux impulsions se propageant à des vitesses différentes suivant les deux directions de polarisation. L'article de C. R. Menyuk montre qu'au-delà d'une certaine puissance, l'effet Kerr conduit à une stabilisation temporelle des impulsions solitons, par modulation de phase croisée entre les solitons se propageant suivant les deux directions de polarisation; on assiste alors à un piégeage temporel mutuel des impulsions suivant les deux directions de polarisation; ainsi, au-delà d'une certaine amplitude, les impulsions suivant les deux directions de polarisation se déplacent ensemble. L'amplitude seuil dépend de la biréfringence de la fibre.

N. N. Islam et autres, Solitons trapping in birefringent optical fibers, Optics Letters, vol. 14 no. 18, Septembre 1989 propose une démonstration expérimentale du piégeage des solitons polarisés orthogonalement dans des fibres optiques biréfringentes; cette démonstration confirme les résultats annoncés dans l'article de C. R. Menyuk précité.

N. S. Islam, Ultrafast all-optical logic gates based on solitons trapping in fibers, Optics Letters, vol. 14 no. 18, Novembre 1989, utilise le piégeage des solitons polarisés orthogonalement dans une fibre biréfringente pour réaliser des portes logiques, avec des fonctions d'inversion, de OU exclusif ou de ET. Les portes reçoivent en entrée des solitons polarisés respectivement suivant une des directions de polarisation d'une fibre; elles utilisent le fait que le piégeage des solitons se traduit temporellement par une coïncidence entre les solitons se déplaçant suivant les directions de polarisation; spectralement, les deux impulsions piégées subissent un déplacement fréquentiel de l'ordre de 1 THz, soit environ 8 nm à 1550 nm. Un filtre en sortie de la fibre élimine les solitons ayant subi un tel déplacement fréquentiel, et permet d'obtenir une porte OU-exclusif; ne traversent le filtre que les solitons qui n'ont pas subi de déplacement fréquentiel, c'est-à-dire ceux qui se sont propagés seuls dans la fibre biréfringente. Un filtre à 0,5 ou 1 THz de la fréquence initiale des solitons permet d'obtenir une porte ET.

L'invention propose une solution au problème de bruit dans les "zéros" de transmission. Elle s'applique tout particulièrement aux systèmes de transmission à signaux solitons.

Plus précisément, l'invention propose un dispositif pour limiter le bruit dans les "zéros" des signaux RZ optiques, comprenant des moyens pour décaler spectralement les signaux entre eux en fonction de leur intensité, et un filtre pour filtrer les signaux décalés, l'atténuation appliquée par le filtre aux signaux correspondant à une valeur "zéro" étant supérieure à l'atténuation appliquée par le filtre aux signaux correspondant à une valeur "un".

Dans un mode de réalisation, l'atténuation appliquée par le filtre aux signaux correspondant à une valeur "zéro" est supérieure d'au moins 6 dB à l'atténuation appliquée par le filtre aux signaux correspondant à une valeur "un".

De préférence, les moyens pour décaler spectralement les signaux comprennent une fibre biréfringente. Cette fibre peut présenter une biréfringence supérieure ou égale à $1 \times 10^{-5}$.

Dans un mode de réalisation, le filtre est un filtre coupe bande, centré sur la fréquence centrale des signaux RZ.

Le dispositif peut en outre présenter un amplificateur, dont la sortie est reliée aux moyens de décalage.

On peut aussi prévoir une deuxième fibre biréfringente en aval du filtre, disposée avec des axes de polarisation alignés par rapport à la première fibre.

L'invention propose aussi un procédé pour limiter le bruit dans les "zéros" des signaux RZ optiques, comprenant

- une étape de décalage spectral les signaux entre eux en fonction de leur intensité, et
- une étape de filtrage des signaux décalés, de sorte que l'atténuation appliquée par le filtre aux signaux correspondant à une valeur "zéro" soit supérieure à l'atténuation appliquée par le filtre aux signaux correspondant à une valeur "un".

De préférence, l'atténuation appliquée par le filtre aux signaux correspondant à une valeur "zéro" est supérieure d'au moins 6 dB à l'atténuation appliquée par le filtre aux signaux correspondant à une valeur "un".

Dans un mode de réalisation, l'étape de décalage comprend l'injection des signaux dans une fibre biréfringente. Cette fibre présente avantageusement une biréfringence supérieure ou égale à $1 \times 10^{-5}$.

On peut en outre prévoir une étape d'amplification des signaux avant l'étape de décalage.

Dans un mode de réalisation, le procédé comprend en outre une étape de passage dans une fibre biréfringente après l'étape de filtrage. D'autres caractéristiques et avantages de l'invention apparaîtront à la lecture de la description qui suit de modes de réalisation de l'invention, donnée à titre d'exemple et en référence aux dessins annexés, qui montrent

- figure 1, une représentation schématique du spectre des impulsions d'un signal RZ ;
- figure 2, une représentation schématique d'un dispositif selon l'invention ;
- figure 3, une représentation schématique des spectres des signaux de la figure 1 après traversée d'une fibre biréfringente;
- figure 4, une représentation schématique d'impulsions RZ ;
- figure 5, une représentation schématique des impulsions correspondantes, en sortie du dispositif de l'invention.

L'invention propose, pour réduire le bruit dans les zéros, de générer un décalage spectral entre les signaux RZ, en fonction de leur intensité, avant de leur appliquer un filtrage. Le décalage spectral et le filtre sont choisis de sorte à ce que les impulsions correspondant à des "uns" traversent le filtre, et le filtre réduise l'amplitude des "zéros". L'invention permet ainsi une réduction sensible du bruit dans les "zéros". Pour appliquer un décalage spectral aux impulsions en fonction de leur intensité, l'invention propose d'utiliser le piégeage des impulsions se propageant suivant les directions de polarisation d'une fibre optique biréfringente. Comme indiqué plus haut, ce piégeage n'apparaît qu'au-delà d'un certain seuil d'intensité.

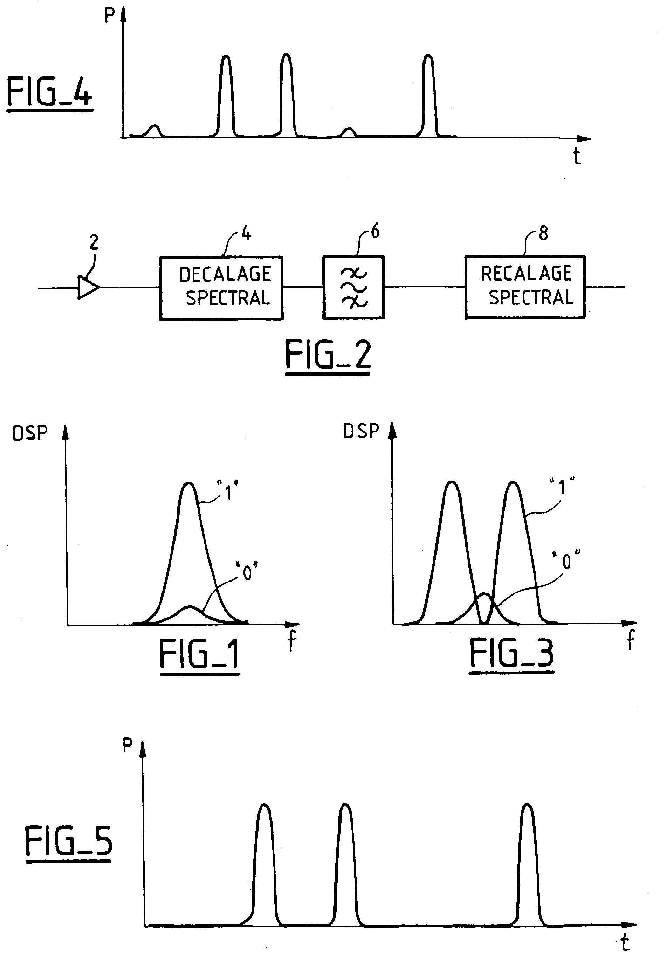

La figure 1 montre une représentation schématique du spectre des impulsions d'un signal RZ. En abscisse sont portées les fréquences, et en ordonnées la densité spectrale de puissance. De façon classique pour un signal RZ, les "uns" sont codés par une impulsion avec un pic d'intensité élevée - représenté en traits fins sur la figure - et les "zéros" sont codés par une absence d'impulsion; comme le montre la figure en traits gras, apparaît néanmoins dans les "zéros" des impulsions avec un pic d'intensité plus faible. Un des objectifs de l'invention, comme exposé plus haut, est de réduire encore l'intensité de ces pics.

La figure 2 montre une représentation schématique d'un dispositif selon l'invention; il comprend essentiellement des moyens 4 pour décaler spectralement les signaux RZ entre eux, en fonction de leur intensité; les signaux fournis en sortie des moyens 4 sont transmis à un filtre 6. Dans le mode de réalisation de la figure 1 est en outre prévu en amont des moyens 4 un amplificateur 2, et en aval du filtre des moyens 8 pour décaler spectralement les impulsions filtrées. L'amplificateur est un amplificateur d'un type connu en soi; la structure du filtre est décrite plus bas.

Les moyens 4 comprennent avantageusement une fibre biréfringente, dans laquelle les signaux sont injectés dans une direction bissectrice ou sensiblement bissectrice des deux directions de polarisation, de sorte à générer des impulsions se propageant suivant les deux directions de polarisation. Cette fibre présente avantageusement une biréfringence supérieure ou égale à 1x10$^{-5}$.

Comme expliqué plus haut, en dessous d'une certaine intensité de l'impulsion d'entrée, les deux impulsions se propagent à des vitesses différentes, et on obtient en sortie de la fibre suivant les directions de polarisation deux impulsions qui sont temporellement décalées, et qui sont spectralement à la fréquence des signaux RZ d'entrée.

En revanche, au-delà d'une certaine intensité, l'effet Kerr assure un piégeage des impulsions suivant les deux directions de polarisation; les impulsions en sortie de la fibre coïncident temporellement, mais sont spectralement décalées.

Un choix approprié de la fibre biréfringente, ainsi que le cas échéant une amplification préalable des signaux grâce à l'amplificateur 2 permettent d'assurer que les signaux correspondant à dès "zéros" ne subissent pas de piégeage dans la fibre biréfringente, et que les signaux correspondant à des "uns" subissent un piégeage. Le seuil d'intensité correspondant est mentionné dans les articles de C. R. Menyuk et M. N. Islam précité. L'intensité nécessaire pour assurer le piégeage mutuel dans une fibre biréfringente peut être facilement déterminée expérimentalement, par l'analyse de la position spectrale et temporelle d'impulsions injectées dans la fibre biréfringente.

La fibre peut par exemple présenter les caractéristiques suivantes :

- dispersion : 8.75ps/nm/km
- biréfringence égale à 2.4x10$^{-5}$;
- longueur : 20m
- section efficace : 50$\mu$m$^2$

Cette fibre permet d'atteindre un décalage spectral d'au moins 1THz pour les impulsions correspondant à des "uns". Dans une telle fibre, l'intensité seuil pour obtenir un piégeage des composantes d'une impulsion suivant les deux directions de polarisation est de 42 pJ . La puissance nécessaire peut par exemple être obtenue grâce à l'amplificateur placé en amont de la fibre 4. Ces valeurs sont données pour des impulsions d'une largeur temporelle de l'ordre de 300 femtosecondes.

Dans le cas d'impulsions solitons, le choix de la fibre biréfringente peut aussi s'effectuer à partir des considérations suivantes : le principe du dédoublement de spectre dans la fibre biréfringente repose sur la non-linéarite de la propagation dans ce troncon de fibre. Les deux relations de proportionnalité suivantes sont à la base du processus:

$$Zo \approx T^2/(\lambda^2.D)$$

$$Po \approx \lambda.Seff/Zo$$

avec

Zo, la période soliton;
Po, la puissance soliton;
T, la largeur temporelle des impulsions;
$\lambda$, la longueur d'onde des impulsions;
D, la dispersion de la fibre; et
Seff, la section efficace de la fibre.

Compte tenu de ces relations, il est possible de faire varier les caractéristiques de la fibre ou des impulsions, en conservant la propriété de piégeage recherchée. Par exemple, lorsqu'on diminue la surface effective Seff de la fibre d'un rapport 2 (de 50 à 25 $\mu$m$^2$ par exemple), on peut relâcher la contrainte sur la puissance seuil à injecter dans le tronçon de fibre d'un rapport 2 également : dans le cas de l'exemple de fibre donné plus haut, on peut injecter 21 pJ sur chacun des axes principaux.

De la même façon, si on veut relâcher la contrainte sur la longueur de la fibre, il faut diminuer Zo donc, soit diminuer la largeur temporelle des impulsions T, soit augmenter la dispersion de la fibre D. Mais il faut aussi parallèlement augmenter la puissance injectée ou bien diminuer la surface effective de la fibre biréfringente Seff. On peut aussi faire varier la largeur temporelle des impulsions - la valeur T dans les formules ci-dessus - pour contrôler de façon corrélative les autres paramètres.

Dans tous les cas, c'est la non-linéarite du phénomène qui nous gouverne donc les deux expressions analytiques ci-dessus. Ainsi, la puissance injectée est proportionnelle a la surface effective, inversement proportionnelle a la période soliton Zo. Autrement dit, la puissance injectée est proportionnelle a la dispersion et inversement proportionnelle au carré de la largeur temporelle des impulsions.

La longueur de la fibre biréfringente est donc de préférence de l'ordre de quelques Zo (5 ou 6 typiquement); elle est proportionnelle au carré de la largeur des impulsions et inversement proportionnelle a la dispersion. Il va de soi également que l'intensité du phénomène utilisé par l'invention est proportionnelle a la biréfringence de la fibre.

Ces considérations peuvent être utilisées pour déterminer les caractéristiques de la fibre compte tenu des impulsions utilisées.

La figure 3 montre une représentation schématique des spectres correspondant à ceux de la figure 1, en sortie de la fibre biréfringente. Apparaît en traits fin le spectre des deux impulsions simultanées, mais décalées en fréquence, qui sont obtenues pour le "un" de la figure 1. En traits gras, on a représenté l'une des deux impulsions qui correspondent au zéro de la figure 1.

L'invention propose d'exploiter le décalage spectral entre les "zéros" d'une part, et les "uns" d'autre part pour filtrer le bruit dans les "zéros"; est prévu à cet effet en sortie de la fibre biréfringente un filtre 6 pour filtrer les "zéros". Ce filtre est par exemple un filtre coupe bande, qui est centré sur la fréquence des signaux RZ appliqués à la fibre biréfringente, et qui présente une largeur telle qu'il laisse passer les impulsions spectralement décalées autrement dit les "uns"; on peut par exemple choisir une largeur de filtre à mi-hauteur de 0.4 THz. Dans ce cas, l'atténuation appliquée aux impulsions correspondant à des "zéros" est d'au moins 6 dB supérieure à l'atténuation appliquée aux impulsions correspondant à des "uns". On récupère en sortie du filtre coupe bande pour chacun des "uns" injectés dans la fibre optique deux impulsions synchrones décalées spectralement.

Il reste possible dans ce cas de prévoir après le filtre des moyens 8 pour assurer le recalage spectral des impulsions filtrées; on peut utiliser à cet effet une deuxième section de fibre biréfringente, avec des axes de polarisation alignés avec ceux de la première fibre, mais inversés par rapport à celle-ci. On peut simplement prendre une section de même longueur de la même fibre, et décaler les axes de polarisation de 90°.Les deux impulsions synchrones décalées spectralement sont injectées dans cette deuxième fibre. D'après le principe bien connu en optique de "retour inverse de la lumière", les deux impulsions synchrones décalées spectralement, lorsqu'elles sont injectées dans la deuxième fibre, ressortent sous forme d'une impulsion unique, avec des caractéristiques en tout point similaires à celles de l'impulsion initiale pénétrant dans la première fibre.

Ce recalage spectral des impulsions peut être obtenu soit par la position géométrique de la deuxième section de fibre, comme expliqué ci-dessus, ou encore en choisissant une deuxième section de fibre différente, avec une dispersion et une biréfringence différente. La sortie de la fibre 8 fournit en tout état de cause une impulsion qui présente les caractéristiques de l'impulsion initiale pénétrant dans la première fibre.

On pourrait aussi utiliser en sortie de la fibre biréfringente un filtre passe haut ou passe bas, qui atténue les signaux autour de la fréquence centrale des signaux d'entrée, et qui laisse passer les signaux piégés suivant l'une des directions de polarisation; la différence avec le mode de réalisation précédent est que l'on ne récupère dans ce cas qu'un train d'impulsions simples, et non pas un train d'impulsions double. Par rapport au train d'impulsions initial, on récupère en sortie un train d'impulsions, qui est décalé en fréquence.

La figure 4 montre une représentation schématique d'impulsions RZ. En abscisse est porté le temps, ou la longueur le long d'un système de transmission; en ordonnée est porté l'intensité. La figure montre cinq bits, avec des valeurs transmises successivement de 1, 0,1,1 et 0 - de droite à gauche sur la figure. Comme expliqué plus haut, on reconnaît sur la figure 4 du bruit dans les "zéros" du signal, c'est-à-dire un signal non nul dans les intervalles temporels correspondant à des "zéros".

La figure 5 montre une représentation schématique des résultats du passage du train d'impulsions de la figure 4 à travers un dispositif selon l'invention, avec une fibre 8 pour recombiner les impulsions; les coordonnées sur les axes sont les mêmes qu'à la figure 4. Comme le montre la figure, les impulsions de forte intensité correspondant à des "uns" ne sont pas modifiées par le passage à travers le dispositif de l'invention; en revanche, les impulsions de faible intensité, correspondant à des "zéros" présentent après avoir traversé le dispositif une intensité sensiblement nulle, comme représenté en traits gras sur la figure 5.

On retrouve donc en sortie du dispositif de l'invention un signal RZ identique en contenu au signal d'entrée, mais dans lequel le bruit des "zéros" est supprimé ou fortement réduit.

Bien entendu, la présente invention n'est pas limitée aux exemples et modes de réalisation décrits et représentés, mais elle est susceptible de nombreuses variantes accessibles à l'homme de l'art. Ainsi, bien que les articles de C. R. Menyuk et M. N. Islam mentionnent le cas de signaux solitons, l'invention s'applique à d'autres types de signaux RZ, dont les composantes suivant les directions de polarisation d'une fibre biréfringente peuvent comme les solitons être piégés par modulation de phase croisée.

Enfin, les valeurs d'intensité des impulsions en entrée de la fibre biréfringente et de biréfringence de la fibre ne sont données qu'à titre d'exemple. On peut choisir des valeurs différentes, de sorte à discriminer les "zéros" des "uns" dans un système de transmission donné. Dans un tel cas, la biréfringence et les autres caractéristiques de la fibre peuvent être choisies en fonction du décalage spectral à appliquer; l'intensité des impulsions correspondant à des "uns" est alors choisie de sorte à assurer un piégeage mutuel des "uns". Le seuil peut être déterminé expérimentalement par l'homme du métier, en mesurant la position temporelle et spectrale d'impulsions injectées.

**Revendications**

**1.** Un dispositif pour limiter le bruit dans les "zéros" des signaux RZ optiques, comprenant des moyens (4) pour décaler spectralement les signaux entre eux en fonction de leur intensité, et un filtre (6) pour filtrer les signaux décalés, l'atténuation appliquée par le filtre aux signaux correspondant à une valeur "zéro" étant supérieure à l'atténuation appliquée par le filtre aux signaux correspondant à une valeur "un".

**2.** Le dispositif selon la revendication 1, caractérisé en ce que l'atténuation appliquée par le filtre aux signaux correspondant à une valeur "zéro" est supérieure d'au moins 6 dB à l'atténuation appliquée par le filtre aux signaux correspondant à une valeur "un".

3.  Le dispositif selon la revendication 1 ou 2, caractérisé en ce que les moyens pour décaler spectralement les signaux comprennent une fibre biréfringente.

4.  Le dispositif selon la revendication 3, caractérisé en ce que la fibre présente une biréfringence supérieure ou égale à $1\times10^{-5}$.

5.  Le dispositif selon l'une des revendications 1 à 4, caractérisé en ce que le filtre est un filtre coupe bande, centré sur la fréquence centrale des signaux RZ.

6.  Le dispositif selon l'une des revendications 1 à 5, caractérisé en ce qu'il comprend en outre un amplificateur (2), dont la sortie est reliée aux moyens de décalage.

7.  Le dispositif selon l'une des revendications 3 à 6, caractérisé en ce qu'il comprend en outre une deuxième fibre biréfringente (8) en aval du filtre, disposée avec des axes de polarisation alignés par rapport à la première fibre.

8.  Un procédé pour limiter le bruit dans les "zéros" des signaux RZ optiques, comprenant

    -   une étape de décalage spectral les signaux entre eux en fonction de leur intensité, et
    -   une étape de filtrage des signaux décalés, de sorte que l'atténuation appliquée par le filtre aux signaux correspondant à une valeur "zéro" soit supérieure à l'atténuation appliquée par le filtre aux signaux correspondant à une valeur "un".

9.  Le procédé selon la revendication 8, caractérisé en ce que l'atténuation appliquée par le filtre aux signaux correspondant à une valeur "zéro" est supérieure d'au moins 6 dB à l'atténuation appliquée par le filtre aux signaux correspondant à une valeur "un".

10. Le procédé selon la revendication 8 ou 9, caractérisé en ce que l'étape de décalage comprend l'injection des signaux dans une fibre biréfringente.

11. Le procédé selon la revendication 10, caractérisé en ce que la fibre présente une biréfringence supérieure ou égale à $1\times10^{-5}$.

12. Le procédé selon l'une des revendications 8 à 11, caractérisé en ce qu'il comprend en outre une étape d'amplification des signaux avant l'étape de décalage.

13. Le procédé selon la revendication 10, 1 1 ou 12, caractérisé en ce qu'il comprend en outre une étape de passage dans une fibre biréfringente après l'étape de filtrage.

EP 1 087 555 A1

FIG_4

FIG_2

DECALAGE SPECTRAL

RECALAGE SPECTRAL

DSP

FIG_1

DSP

FIG_3

FIG_5

7

# EP 1 087 555 A1

**Office européen des brevets**

## RAPPORT DE RECHERCHE EUROPEENNE

Numéro de la demande

EP 00 40 2574

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| A | US 5 864 421 A (MORITA ITSURO ET AL) 26 janvier 1999 (1999-01-26) * abrégé * * revendication 9; figure 5 * | 1-13 | H04B10/18 |
| A | HATAMI-HANZA H ET AL: "DEMONSTRATION OF ALL-OPTICAL DEMULTIPLEXING OF A MULTILEVEL SOLITONSIGNAL EMPLOYING SOLITON DECOMPOSITION AND SELF-FREQUENCY SHIFT" IEEE PHOTONICS TECHNOLOGY LETTERS,US,IEEE INC. NEW YORK, vol. 9, no. 6, 1 juin 1997 (1997-06-01), pages 833-835, XP000198536 ISSN: 1041-1135 * page 833, colonne de gauche, ligne 1 - colonne de droite, ligne 18 * | 1-13 | |
| D,A | ISLAM M N ET AL: "SOLITON TRAPPING IN BIREFRINGENT OPTICAL FIBERS" OPTICS LETTERS,US,OPTICAL SOCIETY OF AMERICA, WASHINGTON, vol. 14, no. 18, 15 septembre 1989 (1989-09-15), pages 1011-1013, XP000065049 ISSN: 0146-9592 * abrégé; figure 2 * | 1-13 | **DOMAINES TECHNIQUES RECHERCHES (Int.Cl.7)** H04B |

Le présent rapport a été établi pour toutes les revendications

| Lieu de la recherche | Date d'achèvement de la recherche | Examinateur |
|---|---|---|
| LA HAYE | 9 janvier 2001 | Lazaridis, P |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03 82 (P04C02)

8

**ANNEXE AU RAPPORT DE RECHERCHE EUROPEENNE
RELATIF A LA DEMANDE DE BREVET EUROPEEN NO.**

EP 00 40 2574

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

09-01-2001

| Document brevet cité au rapport de recherche | Date de publication | Membre(s) de la famille de brevet(s) | Date de publication |
|---|---|---|---|
| US 5864421 A | 26-01-1999 | JP 9318986 A<br>FR 2749407 A | 12-12-1997<br>05-12-1997 |

EPO FORM P0460

Pour tout renseignement concernant cette annexe : voir Journal Officiel de l'Office européen des brevets, No.12/82